# EUROPÄISCHE PATENTANMELDUNG

(11) **EP 3 598 618 A1**
(43) Veröffentlichungstag der Anmeldung: **22.01.2020**
(21) Anmeldenummer: 18184500.9
(22) Anmeldetag: 19.07.2018
(51) Int. Cl.: H02K 17/16

(54) **DYNAMOELEKTRISCHE ROTATORISCHE MASCHINE MIT ELEMENTEN ZUR REDUZIERUNG VON TONALEN GERÄUSCHEN**

(71) Anmelder: Siemens Mobility GmbH, 81739 München (DE)
(72) Erfinder: Brand, Jens, 90459 Nürnberg (DE); Grünthaler, Andreas, 90409 Nürnberg (DE); Krebs, Mario, 91171 Greding-Hausen (DE); Schmidt, Thomas, 90443 Nürnberg (DE)

(57) **Zusammenfassung**

Die Erfindung betrifft eine dynamoelektrische rotatorische Maschine (1) mit
- einem Stator (2), der ein zwischen Zähnen eines magnetischen leitfähigen Körpers befindlichen Nuten (8) angeordnetes Wicklungssystem (5) aufweist, das an den Stirnseiten des Stators (2) jeweils einen Wickelkopf (7) aufweist,
- einen Rotor (12) mit einem Kurzschlusskäfig, der um eine Achse drehbar angeordnet ist und im Betrieb der dynamoelektrischen rotatorischen Maschine (1) über einen Luftspalt (10) mit dem in den Nuten (8) angeordneten Wicklungssystem (5) des Stators (2) motorisch oder generatorisch in elektromagnetischer Wechselwirkung steht,
- kammartig ausgebildeten Elementen (9) an den Stirnseiten des Stators (2), die einen umfänglichen Zwischenraum zwischen den aus den Stirnseiten des Stators (2) ragenden Wicklungssystem (5) einnehmen, so dass tonale Geräusche, die sich im Betrieb einer derartigen elektrischen Maschine ergeben, zumindest reduziert werden.

## Beschreibung

Die Erfindung betrifft eine dynamoelektrische rotatorische Maschine mit Elementen zur Reduzierung von tonalen Geräuschen und ein Verfahren zur Herstellung eines Stators einer derartigen dynamoelektrischen rotatorischen Maschine.

Bei luftgekühlten rotatorischen dynamoelektrischen Maschinen, wie auch bei durchzugsbelüfteten rotatorischen dynamoelektrischen Maschinen ist häufig durch Luftströmung verursachter Lärm eine kritische Größe. Eine der typischen Ursachen für die Schallentstehung ist im Aktivteil dieser Maschinen also im Stator und/oder Rotor zu finden.

So bildet insbesondere bei Asynchronmaschinen mit Käfigläufer, bei denen der Kurzschlussring nicht direkt an der Stirnseite des Rotorblechpakets anliegt, dieser Abstand Innenseite Kurzschlussring zur Stirnseite des Rotorblechpakets eine besonders kritische Stelle. Dort kommt es im Betrieb der dynamoelektrischen rotatorischen Maschine zu aeroakustischen Interaktionen zwischen den Wicklungsspulen des an der Stirnseite des Stators austretenden Wicklungssystems und den Stäben des Rotors. Die schnell an den stehenden Wicklungsspulen des Stators vorbeirotierenden Stäben des Rotors führen zu Druckschwankungen, die tonale Geräusche hervorrufen.

Ausgehend davon liegt der Erfindung die Aufgabe zugrunde, einen Stator bzw. eine Stator-Rotor-Anordnung einer dynamoelektrischen Maschine zu schaffen, die diese Schallemissionen reduziert oder vermeidet.

Die Lösung der gestellten Aufgabe gelingt durch eine dynamoelektrische rotatorische Maschine mit
- einem Stator, der ein zwischen Zähnen eines magnetischen leitfähigen Körpers befindlichen Nuten angeordnetes Wicklungssystem aufweist, das an den Stirnseiten des Stators jeweils einen Wickelkopf aufweist,
- einen Rotor mit einem Kurzschlusskäfig, der um eine Achse drehbar angeordnet ist und im Betrieb der dynamoelektrischen rotatorischen Maschine über einen Luftspalt mit dem in den Nuten angeordneten Wicklungssystem des Stators motorisch oder generatorisch in elektromagnetischer Wechselwirkung steht,
- kammartig ausgebildeten Elementen an den Stirnseiten des Stators, die einen umfänglichen Zwischenraum zwischen den aus den Stirnseiten des Stators ragenden Wicklungssystem einnehmen, so dass tonale Geräusche, die sich im Betrieb einer derartigen elektrischen Maschine ergeben, zumindest reduziert werden.

Die Lösung der gestellten Aufgabe gelingt auch durch ein Verfahren zur Herstellung eines Stators einer erfindungsgemäßen dynamoelektrischen Maschine durch folgende Schritte:
- Herstellen eines magnetische leitfähigen Körpers, der einen Jochrücken mit radial nach innen weisenden Zähnen und zwischen diesen Zähnen befindlichen Nuten aufweist,
- Anbringen von elastischen Elementen an den Stirnseiten des magnetisch leitfähigen Körpers, deren Form im Wesentlichen der Querschnittsform des magnetisch leitfähigen Körpers entspricht,
- Einlegen eines Wicklungssystems in Nuten des magnetisch leitfähigen Körpers,
- Imprägnieren und Aushärten des magnetisch leitfähigen Körpers mit Wicklungssystem und elastischen Elementen, wobei dabei die elastische Eigenschaft der Elemente verloren geht und sich somit eine robuste im Wesentlichen zylindrische Fläche durch Abfolge der aus den Stirnseiten des magnetisch leitfähigen Körpers ragenden Wicklungssystem und den Elemente einstellt.

Durch die erfindungsgemäße Anbringung von Elementen an den Stirnseiten des magnetisch leitfähigen Körpers, der als Statorblechpaket oder vorzugsweise einstückig gesinterter Stator ausgebildet ist, ist nunmehr für die vor allem durch den axialen stirnseitigen Stabüberstand des Rotors geförderte Luft, insbesondere kein radialer Zwischenraum mehr zwischen den Wicklungsspulen des Stators. Somit werden die ursächlich für die tonalen Störungen Rotor-Stator-Interaktionen vermieden oder zumindest reduziert.

Die kammartige Ausgestaltung dieser Elemente orientiert sich in Umfangsrichtung betrachtet sowohl an der Breite der Zähne als auch an der radialen Höhe der Nuten. Die Zähne sind dabei durch ein stirnseitiges Endblech, eine stirnseitige Druckscheibe oder des Querschnitts des gesinterten Stators vorgegeben, allgemein also der Nutenform. Damit wird vermieden, dass sich derartige Zwischenräume an den Stirnseiten des Stators auftreten.

Die im Betrieb der dynamoelektrischen rotatorischen Maschine weiter von den Stäben des Rotors geförderte Luft wird nunmehr in tangentialer oder axialer Richtung gefördert und kann somit die Kühlung der umliegenden Teile, wie Kurzschlussring des Rotors oder den Wickelkopf des Stators verbessern.

Vorteilhafterweise entspricht dabei die axiale Dicke der Elemente im Wesentlichen dem axialen Überstand der Stäbe des Rotors, also dem Abstand der Innenseite des Kurzschlussringes von der Stirnseite des Rotors. Der Kurzschlussring des Rotors ist somit auf beiden axialen Seiten jeweils von der Stirnseite des Rotors beabstandet.

Die Erfindung ist selbstverständlich auch bei Käfigläufern einsetzbar, deren Kurzschlussringe direkt an den Stirnseiten anliegen.

Zur Erleichterung der Montage sind diese Elemente in Umfangsrichtung betrachtet segmentförmig aufgebaut. Dabei können die kammartigen Elemente einige wenige und bis zu zwanzig "Zinken" aufweisen. Dies hängt u.a. von der Nutzahl ab, da in Umfangsrichtung drei bis acht Segmente vorgesehen werden.

Es können selbstverständlich auch Elemente mit unterschiedlicher "Zinkenanzahl" an einer Maschine vorgesehen werden. Dabei ist nur der Abstand der "Zinken" zueinander - also der Nutabstand bzw. die Zahnbreite identisch.

Um Überschläge zwischen den Wicklungsspulen, die aus der Stirnseite des Stators austreten über die Elemente zu vermeiden, sind diese Elemente vorzugsweise aus Isolationsmaterial gefertigt.

Das Herstellen eines derartigen Stators einer dynamoelektrischen Maschine vollzieht sich dabei durch die oben genannten Schritte. Vorzugsweise werden dabei die Elemente aus einem elastischen vorzugsweise biegbaren Isolationsmaterial gefertigt, das entweder segmentweise oder von einer Art Endlostrommel abschneidbar ist und sich so dem Umfang des Stators anpassen lässt.

Diese Elemente werden dabei an den Stirnseiten des Stator befestigt, vorzugsweise durch ein doppelseitiges Klebeband. Danach wird das gesamte Wicklungssystem in die Nuten des Stators eingesetzt. Das anschließende Imprägnieren und Aushärten führt auch zum Aushärten dieser Elemente. Somit stellt sich nunmehr eine robuste Fläche an den Stirnseiten des Stators in Umfangsrichtung ein. Diese bildet eine Abfolge von den kammartig ausgebildeten Ausformungen der Elemente, also den "Zinken", die zum Luftspalt weisen, und den Austritten des Wicklungssystems aus den Nuten. Diese Abfolge stellt somit einen zylindrischen Aufsatz an der Stirnseite des Stators dar, der keine radialen Lücken ausweist und so tonale Geräusche vermeidet.

Durch die zumindest vorab elastischen Elemente lassen sich ggf. durch geeignete Umformungen sämtliche Zwischenräume zwischen den in Umfangsrichtung betrachteten Abfolgen von Wicklungssystem und "Zinken" der kammartigen Elemente vermeiden. Die spätere Aushärtung führt zu dieser robusten Fläche, die jegliche tonale Geräuschemissionen nunmehr vermeidet.

Die Erfindung sowie weitere vorteilhafte Ausgestaltungen der Erfindung werden anhand prinzipiell dargestellter Ausführungsbeispielen näher erläutert. Darin zeigen:
- FIG 1: einen Teilquerschnitt einer dynamoelektrischen Maschine,
- FIG 2: einen Teillängsschnitt einer elektrischen Maschine,
- FIG 3: einen Teillängsschnitt einer elektrischen Maschine mit Elementen,
- FIG 4, FIG 5: teilperspektivische Ansichten eines Stators.

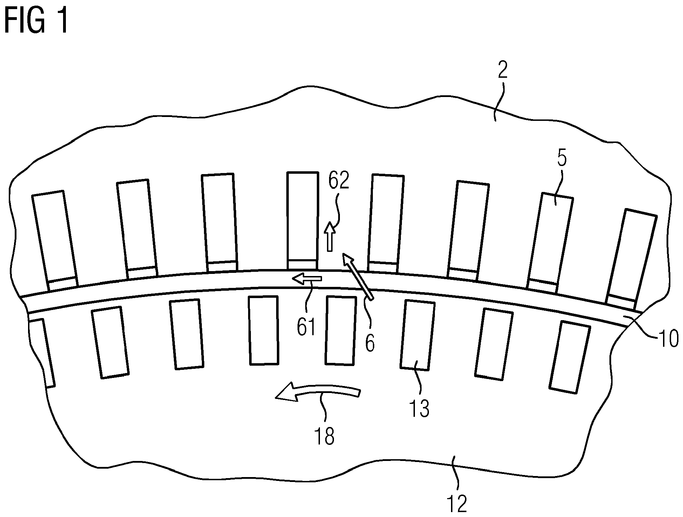

FIG 1 zeigt in einer Seitenteilansicht einen Stator 2 einer dynamoelektrischen Maschine 1, insbesondere einer Asynchronmaschine und einen Rotor 12. Der Rotor 12 weist Leiterstäbe 13 auf, die in geschlossenen Rotornuten gemäß FIG 1 oder auch halb offenen Rotornuten zu einem Luftspalt 10 der dynamoelektrischen rotatorischen Maschine 1 weisen. Des Weiteren weist der Rotor 12 axial verlaufende Kühlkanäle 20 auf. Im Stator 2 ist ein Wicklungssystem 5 angeordnet, das beispielsweise aus Zahnspulen, einem Einschichtwicklungssystem oder mehrschichtigen Wicklungssystem aufgebaut sein kann. Auch der Stator 2 kann innerhalb oder an der Oberfläche des Stators 2 axial verlaufende Kühlkanäle aufweisen.

Im Betrieb der dynamoelektrischen Maschine 1 erfolgt aufgrund einer Drehung 18 des Rotors 12 um eine nicht näher dargestellte Achse 17 eine Luftströmung 6, die sich in eine radiale Komponente 62 und eine tangentiale Komponente 61 aufteilt. Die radiale Komponente 62 verläuft normalerweise an den Stirnseiten des Stators 2. Die tangentiale Luftströmung 61 verläuft im Luftspalt 10 bzw. entlang einem Kurzschlussring 14 eines Kurzschlusskäfigs des Rotors 12. Die radiale Komponente 62 der Luftströmung 6 verursacht nunmehr im Bereich der Austritte des Wicklungssystems 5 an den Stirnseiten des Stators 2 Geräusche.

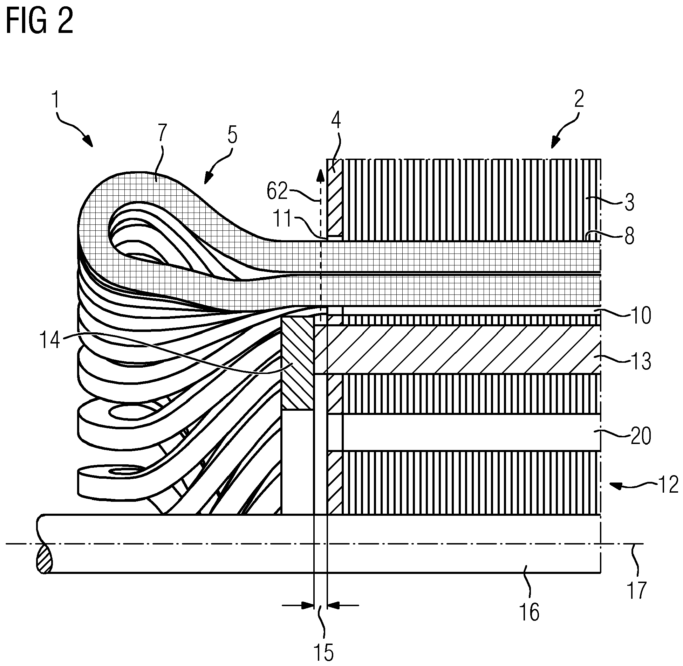

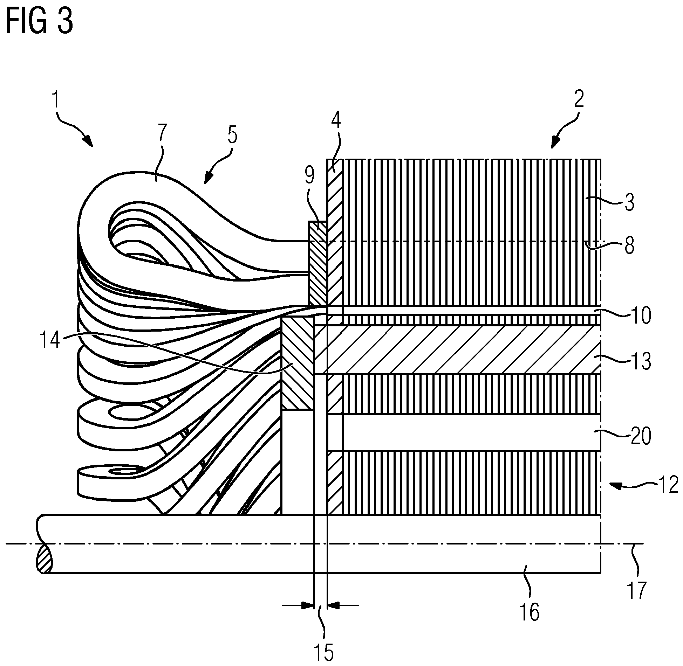

Dieser axiale Abstand 15 gemäß FIG 2 zwischen Kurzschlussring 14 und der Stirnseite des Rotors 12, führt ursächlich zu der Luftströmung 6 im Bereich des Wicklungssystems 5 des Stators 2 und damit zu den Schallemissionen. Durch die erfindungsgemäßen Elementen 9 wird nunmehr gemäß FIG 3 die radiale Komponente 62 der Luftströmung 6 in ihrer Entfaltung unterdrückt.

Dabei sind die Elemente 9 vor allem im Bereich zwischen der Stirnseite des Stators 2 und der axialen Höhe des Kurzschlussrings 14 des Rotors 12 angeordnet. Die Elemente 9 weisen dabei eine axiale Mindesterstreckung auf, die sich axial von der Stirnseite des Stators 2 bis zumindest auf Höhe der Innenkante des Kurzschlussrings 14 erstreckt.

Die magnetisch leitfähigen Körper von Stator 2 und Rotor 12 sind als Blechpakete von Rotor 12 und Stator 2 ausgebildet und sind im vorliegenden Fall durch Druckscheiben 4 paketiert.

FIG 3 zeigt im Unterschied zur FIG 2 ergänzend die Elemente 9, die in dem Bereich zwischen der Stirnseite des Blechpakets 3 des Stators 2 und dem Wickelkopf 7 angebracht sind. Dabei werden nunmehr die vorher vorhandenen Zwischenräume im Bereich der Zähne, also zwischen dem axialen Austritt der Wicklungsspulen geschlossen.

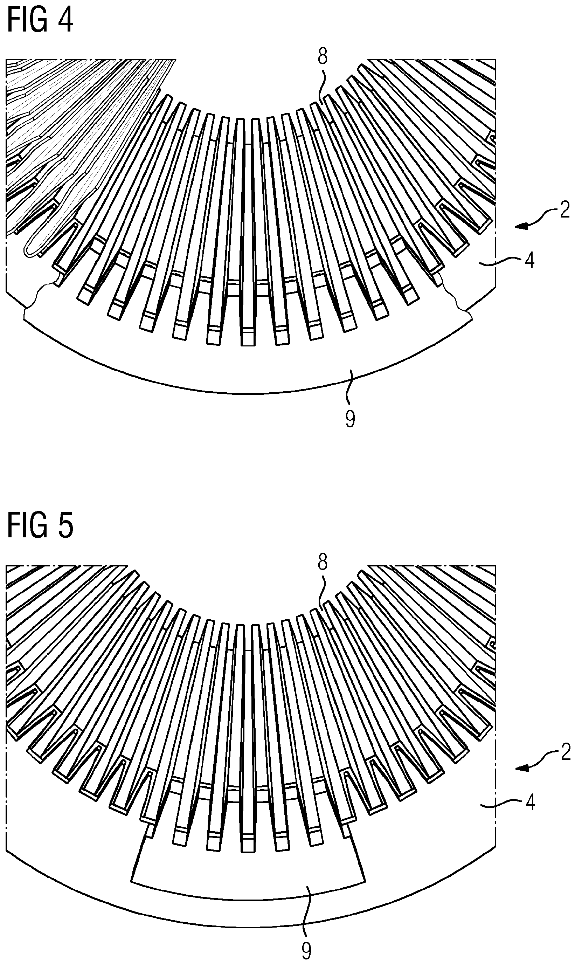

FIG 4 zeigt in einer teilperspektivischen Darstellung einen Stator 2, der an der Stirnseite mit einem Element 9 versehen ist, das auf der Druckscheibe 4 positioniert ist. Die kammartige Ausgestaltung des Elements 9, also die Form der "Zinken" orientiert sich im Wesentlichen an der Querschnittsform der Zähne des Blechpakts 3 des Stators 2 und weisen radial nach innen zum Luftspalt 10. Des Weiteren ist im linken Teil dieser Darstellung die Nutkastenisolation für das Einsetzen der Wicklung vorbereitet.

FIG 5 zeigt in einer weiteren teilperspektivischen Darstellung des Stators 2 ein Element 9, das als Segment ausgeführt ist und das sich an der Stirnseite des Stators 2 befindet.

Des Weiteren zeigt sich aus FIG 4 und FIG 5, dass unmittelbar nach dem Bereitstellen des magnetisch leitfähigen Körpers, also beispielsweise nach dem Sintern des magnetisch leitfähigen Körpers oder dem Stanzpaketieren des Blechpakets 3 des Stators 2, die Anbringung dieser Elemente 9 mittels vorzugsweise eines doppelseitigen Klebebandes vorgenommen wird. Dies geschieht noch bevor die Nutkastenisolation in die Nuten 8 gesetzt und das Wicklungssystem 5 eingelegt wird. Anschließend wird ein Imprägnier- und Aushärtevorgang eingeleitet, der u.a. zur Verfestigung der Elemente 9 an den Stirnseiten des Stators 2 führt.

Derartige dynamoelektrische Maschinen 1 werden vor allem bei schnell laufenden dynamoelektrischen rotatorischen Maschinen wie z.B. Fahrzeugen aller Art, wie Schienenfahrzeugen, E-Cars, Miningtrucks etc. eingesetzt.

## Patentansprüche

1. Dynamoelektrische rotatorische Maschine (1) mit
- einem Stator (2), der ein zwischen Zähnen eines magnetischen leitfähigen Körpers befindlichen Nuten (8) angeordnetes Wicklungssystem (5) aufweist, das an den Stirnseiten des Stators (2) jeweils einen Wickelkopf (7) aufweist,
- einen Rotor (12) mit einem Kurzschlusskäfig, der um eine Achse drehbar angeordnet ist und im Betrieb der dynamoelektrischen rotatorischen Maschine (1) über einen Luftspalt (10) mit dem in den Nuten (8) angeordneten Wicklungssystem (5) des Stators (2) motorisch oder generatorisch in elektromagnetischer Wechselwirkung steht,
- kammartig ausgebildeten Elementen (9) an den Stirnseiten des Stators (2), die einen umfänglichen Zwischenraum zwischen den aus den Stirnseiten des Stators (2) ragenden Wicklungssystem (5) einnehmen, so dass tonale Geräusche, die sich im Betrieb einer derartigen elektrischen Maschine ergeben, zumindest reduziert werden.

2. Dynamoelektrische Maschine (1) nach Anspruch 1, **dadurch gekennzeichnet , dass** die axiale Dicke der Elemente (9) im Wesentlichen dem Abstand des Kurzschlussrings von der Stirnseite des magnetisch leitfähigen Körpers des Rotors (12) entspricht.

3. Dynamoelektrische Maschine (1) nach Anspruch 1 oder 2,
**dadurch gekennzeichnet , dass** sich die Elemente (9) an den Stirnseiten des Stators (2) in Umfangsrichtung betrachtet aus jeweils mehreren Segmenten zusammensetzen.

4. Dynamoelektrische Maschine (1) nach einem der vorhergehenden Ansprüche, **dadurch gekennzeichnet, dass** die Form der Zähne des Stators (2) im Wesentlichen der kammartigen Ausformung der Elemente (9) entspricht.

5. Dynamoelektrische Maschine (1) nach einem der vorhergehenden Ansprüche, **dadurch gekennzeichnet, dass** die Elemente (9) aus Isolationswerkstoff bestehen.

6. Verfahren zur Herstellung eines Stators einer dynamoelektrischen Maschine (1) durch folgende Schritte:
- Herstellen eines magnetische leitfähigen Körpers, der einen Jochrücken mit radial nach innen weisenden Zähnen und zwischen diesen Zähnen befindlichen Nuten (8) aufweist,
- Anbringen von elastischen Elementen an den Stirnseiten des magnetisch leitfähigen Körpers, deren Form im Wesentlichen der Querschnittsform des magnetisch leitfähigen Körpers entspricht,
- Einlegen eines Wicklungssystems in Nuten (8) des magnetisch leitfähigen Körpers,
- Imprägnieren und Aushärten des magnetisch leitfähigen Körpers mit Wicklungssystem und elastischen Elementen (9), wobei dabei die elastische Eigenschaft der Elemente (9) verloren geht und sich somit eine robuste im Wesentlichen zylindrische Fläche durch Abfolge der aus den Stirnseiten des magnetisch leitfähigen Körpers ragenden Wicklungssystem und den Elemente (9) einstellt.

7. Verfahren nach Anspruch 6, **dadurch gekennzeichnet, dass** der magnetisch leitfähige Körper durch Stanzpaketieren von Statorblechen, hergestellt wird, die jeweils einen Jochrücken mit radial nach innen weisenden Zähnen und zwischen diesen Zähnen befindlichen Nuten (8) aufweisen.

8. Verfahren nach Anspruch 7, **dadurch gekennzeichnet, dass** die Form der elastischen Elemente (9) im Wesentlichen der Form der Bleche entspricht.

9. Verfahren nach einem der vorhergehenden Ansprüche, **dadurch gekennzeichnet , dass** die elastischen Elemente (9) mittels eines Doppelklebebands an den Stirnseiten befestigt werden.

10. Fahrzeug mit einer dynamoelektrischen rotatorischen Maschine (1) nach einem der Ansprüche 1 bis 5.
